(19) **Europäisches Patentamt / European Patent Office / Office européen des brevets**

(11) **EP 4 008 181 A1**

(12) **EUROPÄISCHE PATENTANMELDUNG**

(43) Veröffentlichungstag:
08.06.2022  Patentblatt 2022/23

(21) Anmeldenummer: 21207437.1

(22) Anmeldetag: **10.11.2021**

(51) Internationale Patentklassifikation (IPC):
**A01M 1/10** $^{(2006.01)}$    **G01F 11/28** $^{(2006.01)}$
**G01F 23/00** $^{(2022.01)}$

(52) Gemeinsame Patentklassifikation (CPC):
**A01M 1/106; G01F 23/2928**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **03.12.2020  AT 510572020**

(71) Anmelder: **WITASEK Pflanzenschutz GmbH 9560 Feldkirchen (Ktn.) (AT)**

(72) Erfinder: **WITASEK, Peter 9560 Feldkirchen (AT)**

(74) Vertreter: **Beer & Partner Patentanwälte KG Lindengasse 8 1070 Wien (AT)**

(54) **VORRICHTUNG ZUM ERMITTELN DER ZAHL GEFANGENER INSEKTEN**

(57) Eine Vorrichtung (100) zum Ermitteln der Zahl der in einer Insektenfalle gefangenen Insekten besitzt ein als Messrohr dienendes Gefäß (103), in dem sich die gefangenen Insekten ansammeln. Das Gefäß (103) ist in einem Schutzbecher (102) angeordnet, der an dem unteren Ende eines Gehäuses (101) der Vorrichtung (100) angeordnet ist. Die Lage der Oberfläche (123) der Schicht (122) aus Insekten in dem Gefäß (103) wird mit Hilfe eines Abstandssensors einer Sensoreinheit (115) erfasst. Aus der so erfassten Stärke der Schicht (122) aus angesammelten Insekten und der Querschnittsfläche des Gefäßes (103) wird das Volumen errechnet. Aus dem Volumen wird auf die Zahl der Insekten in dem Gefäß (103) geschlossen.

Fig. 6

EP 4 008 181 A1

**Beschreibung**

Die Erfindung betrifft eine Vorrichtung mit den Merkmalen des einleitenden Teils von Anspruch 1.

Insektenfallen sind in verschiedenen Ausführungsformen bekannt.

Die bekannten Insektenfallen besitzen einen Auffangbehälter (Fangflasche), in dem sich gefangene Insekten sammeln.

Bekannt sind unter anderem sogenannte "Schlitzfallen", in welchem Zusammenhang auf AT 16 255 U1 und AT 503 707 B1 verwiesen werden kann.

Oft stellt sich das Problem, die Zahl der gefangenen Insekten, z.B. Borkenkäfer (Buchdrucker), zu erfassen.

Derzeit muss die Falle in regelmäßigen Abständen kontrolliert, und - falls "voll" - geleert werden. Das ist eine zeitaufwändige und daher kostenverursachende Tätigkeit.

Es wurde schon vorgeschlagen, Insektenfallen mit Einrichtungen zum Erfassen der Zahl der gefangenen Insekten auszurüsten.

WO 2014/037936 A1 und US 2019/327,951 A1 zeigen Insektenfallen, die mit solchen Einrichtungen zum Zählen der gefangenen Insekten ausgestattet sind.

In WO 2014/037936 A1 wird zum Zählen der gefangenen Insekten ein optischer Sensor oder Näherungssensor verwendet, der im Bereich der Eintrittsöffnung des Fangbehälters (Fangflasche) angeordnet ist.

Das Erfassen von Insekten mit Hilfe von optischen Sensoren oder Näherungssensoren, ist - ebenso wie das Erfassen der Zahl der Insekten, die in die Fangflasche gelangen, mit Hilfe von Lichtschranken - eine empfindliche und für den Einsatz im Forstbetrieb nicht immer geeignete Lösung des Problems, gefangene Insekten zu zählen.

Mit einer aus CN 110849434 A bekannten Vorrichtung wird die Menge gefangener Insekten über das Volumen ermittelt. Verwendet wird ein Messzylinder, wobei mit Hilfe eines Abstandssensors (IR oder Ultraschall) die Höhe des Hohlraumes in dem Messzylinder ermittelt wird. Die Oberseite der Menge der in dem Messzylinder enthaltenen Insekten wird geglättet. Angewendet wird eine Formel, mit der die Zahl der Insekten aus der

- Querschnittsfläche des Messzylinders,
- Höhe der Insekten in dem Messzylinder und einem
- insektenspezifischen Koeffizienten

berechnet wird.

Der Messzylinder ist in einem Schutzbehälter aufgenommen.

Bei CN 107347859 A wird das Volumen von in einer konischen Falle gefangener Insekten berechnet. Die gefangenen Insekten werden mit Hilfe einer Beobachtungseinheit in Form einer Kamera beobachtet. Eine Auswerteeinheit errechnet aus den von der Beobachtungseinheit gelieferten Daten (Bilder) die Zahl der gefangenen Insekten. Dazu wird die Größe (Radius) des Bildes der Oberfläche der gefangenen Insekten herangezogen. Aus dem Volumen wird unter Anwenden der Masse eines Insekts die Zahl der gefangenen Insekten errechnet.

Der Erfindung liegt die Aufgabe zugrunde, eine Vorrichtung der eingangs genannten Gattung zur Verfügung zu stellen, mit denen das Zählen gefangener Insekten, also das Ermitteln der Zahl der gefangenen Insekten, sicher und mit geringem Aufwand möglich ist.

Erfindungsgemäß wird diese Aufgabe mit einer Vorrichtung gelöst, die die Merkmale von Anspruch 1 aufweist.

Bevorzugte und vorteilhafte Ausgestaltungen der Erfindung sind Gegenstand der Unteransprüche.

In einer beispielsweisen Ausführungsform kann sich die erfindungsgemäße Vorrichtung dadurch auszeichnen, dass das Gefäß an seinem der Entfernungsmesseinrichtung zugekehrten Ende eine Öffnung aufweist.

In einer beispielsweisen Ausführungsform kann sich die erfindungsgemäße Vorrichtung dadurch auszeichnen, dass das obere Ende des Gefäßes trichterartig ausgebildet ist.

In einer beispielsweisen Ausführungsform kann sich die erfindungsgemäße Vorrichtung dadurch auszeichnen, dass die Entfernungsmesseinrichtung ein Abstandssensor ist.

In einer beispielsweisen Ausführungsform kann sich die erfindungsgemäße Vorrichtung dadurch auszeichnen, dass der Abstandssensor ein Infrarot-Abstandssensor ist.

In einer beispielsweisen Ausführungsform kann sich die erfindungsgemäße Vorrichtung dadurch auszeichnen, dass in dem Gehäuse ein Stromspeicher angeordnet ist.

In einer beispielsweisen Ausführungsform kann sich die erfindungsgemäße Vorrichtung dadurch auszeichnen, dass der Stromspeicher mit einem Solarpanel elektrisch verbunden ist.

In einer beispielsweisen Ausführungsform kann sich die erfindungsgemäße Vorrichtung dadurch auszeichnen, dass dem Stromspeicher eine Einrichtung zum berührungslosen Laden zugeordnet ist.

In einer beispielsweisen Ausführungsform kann sich die erfindungsgemäße Vorrichtung dadurch auszeichnen, dass das Gehäuse an seinem oberen Ende als Teil der Kupplung ein Gewinde oder einen Bajonettverschluss aufweist.

In einer beispielsweisen Ausführungsform kann sich die erfindungsgemäße Vorrichtung dadurch auszeichnen, dass die Innenflächen des Gehäuses, des Gefäßes und des Trichters sowie die Leitfläche, insbesondere durch Beläge aus Teflon-Folie, glatt ausgebildet sind.

In einer beispielsweisen Ausführungsform kann sich die erfindungsgemäße Vorrichtung dadurch auszeichnen, dass an der Wand des Gehäuses Schalter für das Bedienen und das Steuern der Vorrichtung vorgesehen sind.

In einer beispielsweisen Ausführungsform kann sich die erfindungsgemäße Vorrichtung dadurch auszeichnen, dass die Schalter als Touch-Panel ausgebildet sind.

In einer beispielsweisen Ausführungsform kann sich die erfindungsgemäße Vorrichtung dadurch auszeichnen, dass an der Außenseite des Gehäuses ein Anzeigegerät, insbesondere ein Display, vorgesehen ist, das die Zahl der gefangenen Insekten anzeigt.

In einer beispielsweisen Ausführungsform kann sich die erfindungsgemäße Vorrichtung dadurch auszeichnen, dass die am Anzeigegerät stehenden Werte auf wenigstens einem mobilen Empfangsgerät, das mit der Vorrichtung über eine Drahtlosverbindung, insbesondere eine Funkstrecke, verbunden ist, angezeigt werden.

In einer beispielsweisen Ausführungsform kann sich die erfindungsgemäße Vorrichtung dadurch auszeichnen, dass die Vorrichtung eine Sendeeinheit zum Übermitteln von Daten betreffend die Zahl der gefangenen Insekten an das Empfangsgerät aufweist.

In einer beispielsweisen Ausführungsform kann sich die erfindungsgemäße Vorrichtung dadurch auszeichnen, dass auf dem Empfangsgerät eine App installiert ist, mit der die Zahl der gefangenen Insekten, welche von der Sendeeinheit übermittelt wurde, angezeigt wird.

In einer beispielsweisen Ausführungsform kann sich die erfindungsgemäße Vorrichtung dadurch auszeichnen, dass das Anzeigegerät und/oder der Stromspeicher in einem gesonderten Raum des Gehäuses angeordnet sind.

In einer beispielsweisen Ausführungsform kann sich die erfindungsgemäße Vorrichtung dadurch auszeichnen, dass der gesonderte Raum mit Kunstharz ausgefüllt ist.

In einer beispielsweisen Ausführungsform kann sich die erfindungsgemäße Vorrichtung dadurch auszeichnen, dass der Mikrokontroller in einem Raum des Gehäuses angeordnet ist, der nach außen durch eine Scheibe aus Kunststoff, wie Acrylglas, verschlossen ist.

Mit der erfindungsgemäßen Vorrichtung wird die Zahl der gefangenen Insekten anhand des Volumens derselben ermittelt.

Da mit der erfindungsgemäßen Vorrichtung das Volumen der gefangenen Insekten erfasst und aus dem Volumen die Zahl der gefangenen Insekten ermittelt wird, arbeitet die Vorrichtung sicherer und zuverlässiger als die bekannten Vorrichtungen, mit optischen Sensoren oder Näherungssensoren, welche Insekten erfassen, wenn sich diese in die Fangflasche bewegen.

Beispielsweise kann im Falle des Borkenkäfers (Buchdruckers) - ein Milliliter gefangener Borkenkäfer entspricht etwa 40 Borkenkäfern - bei einem Volumen, das die gefangenen Insekten einnehmen, von 20 Millilitern von etwa 800 gefangenen Borkenkäfern ausgegangen werden.

Die durch das Volumen ermittelte Zahl an gefangenen Insekten kann unmittelbar an der Insektenfalle angezeigt werden. Alternativ ist es möglich, die Zahl der gefangenen Insekten an in Abstand von der Falle befindliche Geräte zu senden und dort anzuzeigen. In diesem Zusammenhang ist beispielsweise in Betracht gezogen, die erfasste Zahl an gefangenen Insekten drahtlos auf ein (mobiles) Empfangsgerät, wie ein Tablet oder ein Mobiltelefon, zu übertragen. Dabei ist weiter in Betracht gezogen, auf dem Empfangsgerät (Tablet oder Mobiltelefon) eine App zu installieren, mit der die Zahl der gefangenen Insekten angezeigt, gespeichert und daraus eine Fangstatistik ermittelt wird.

Für das Erfassen des Volumens gefangener Insekten gibt es verschiedene Möglichkeiten. Im Rahmen der Erfindung ist bevorzugt, dass das Volumen durch Erfassen der Abmessungen einer Schicht aus in einem Raum angesammelten Insekten bestimmt wird. Dabei kann so vorgegangen werden, dass das Volumen der in dem Raum angesammelten Insekten erfasst wird, indem aus der Querschnittsfläche des Raumes und der Höhe der Schicht aus in dem Raum angesammelten Insekten durch Multiplizieren das Volumen errechnet wird.

Für das Erfassen der Höhe der Schicht aus Insekten ist bevorzugt vorgesehen, dass die Höhe der Schicht aus in dem Raum angesammelten Insekten erfasst wird, indem die Lage der Oberseite der Schicht aus in dem Raum angesammelten Insekten bestimmt wird. Dabei kann beispielsweise ein (berührungslos arbeitendes) Entfernungsmessgerät verwendet werden.

In Betracht gezogen ist auch die Möglichkeit, ein Signal abzugeben, wenn eine bestimmte Anzahl von Insekten gefangen wurde. In diesem Fall wird beispielsweise beim Erreichen eines vorgegebenen oder vorwählbaren Volumens in der Fangflasche ein Signal abgegeben. Dieses Signal kann ein optisches und/oder ein akustisches Signal sein, das unmittelbar an der Falle und/oder von dem mobilen Empfangsgerät abgegeben wird.

Die Erfindung kann an allen Fallen, mit welchen Insekten gefangen werden, angewendet werden. Beispiele für Ausgestaltungen verwendbarer Fallen sind Schlitzfallen, Segmenttrichterfallen oder Kreuzbarrierenfallen.

Von Vorteil bei der erfindungsgemäßen Vorrichtung ist es, dass beliebige Insektenfallen nachgerüstet werden können. Beispielsweise genügt es, die bekannten Fangbehälter (Fangflaschen), in welchen gefangene Insekten gesammelt werden, durch die erfindungsgemäße Vorrichtung zu ersetzen.

Die Versorgung der erfindungsgemäßen Falle mit elektrischem Strom kann über das Stromnetz und/oder einen Stromspeicher (Batterie oder Akkumulator) und/oder über wenigstens ein Fotovoltaik-Element erfolgen. Es ist auch ein Modul für einen Wireless-Powershare eingebaut. Sollte der Akkumulator für die Einlagerung über den Winter aufgeladen werden, kann dies über dieses Modul erfolgen. Jede weitere Öffnung außen am Zähler wäre eine Eintrittspforte für Feuchtigkeit.

Weitere Einzelheiten, Merkmale und Vorteile der erfindungsgemäßen Insektenfalle ergeben sich aus der nachstehenden Beschreibung eines bevorzugten Ausführungsbeispiels anhand der Zeichnungen. Es zeigt:

Fig. 1      eine aus AT 16255 U1 bekannte Insektenfalle,
Fig. 2      eine Wanne der Falle aus Fig. 1 mit einer (schematisch dargestellten) erfindungsgemäßen Vorrichtung,
Fig. 3      eine Ausführungsform einer Insektenfalle als Kreuzbarrierenfalle mit einer erfindungsgemäßen Vorrichtung,
Fig. 4      eine Ausführungsform einer Insektenfalle als Segmenttrichterfalle mit einer erfindungsgemäßen Vorrichtung,
Fig. 5      in Seitenansicht eine erfindungsgemäße Vorrichtung,
Fig. 6      schematisch und in Längsschnitt die Vorrichtung aus Fig. 5,
Fig. 7      die Vorrichtung aus Fig. 5 ohne Schutzbecher,
Fig. 8      die Vorrichtung aus Fig. 7 in Seitenansicht,
Fig. 9      den Schnitt längs Linie B in Fig. 8,
Fig. 10     den Schnitt längs Linie C in Fig. 8,

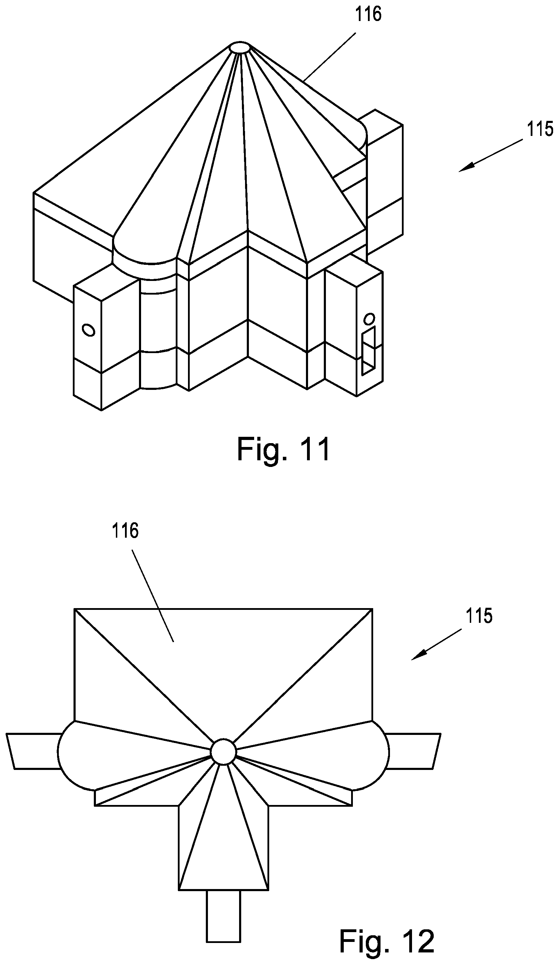

Fig. 11     eine Sensoreinheit in Schrägansicht und
Fig. 12     die Sensoreinheit in Draufsicht.

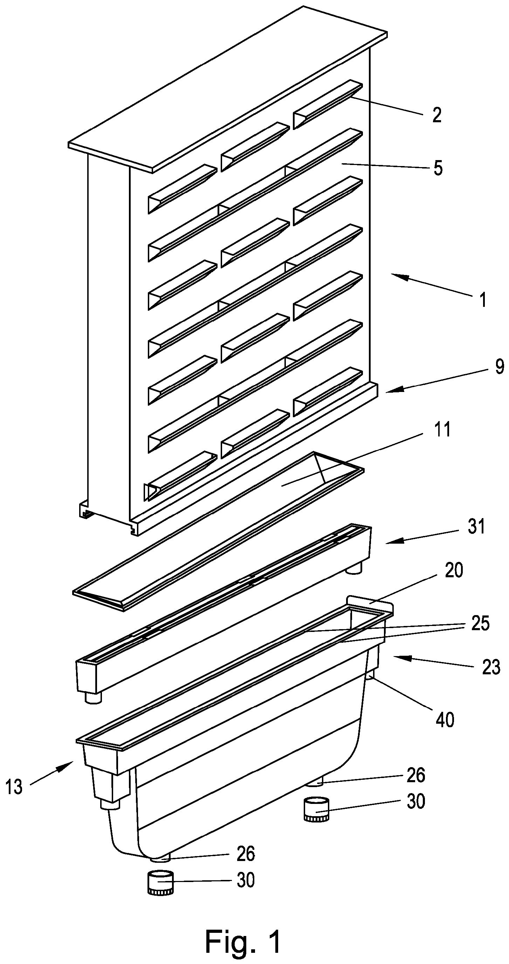

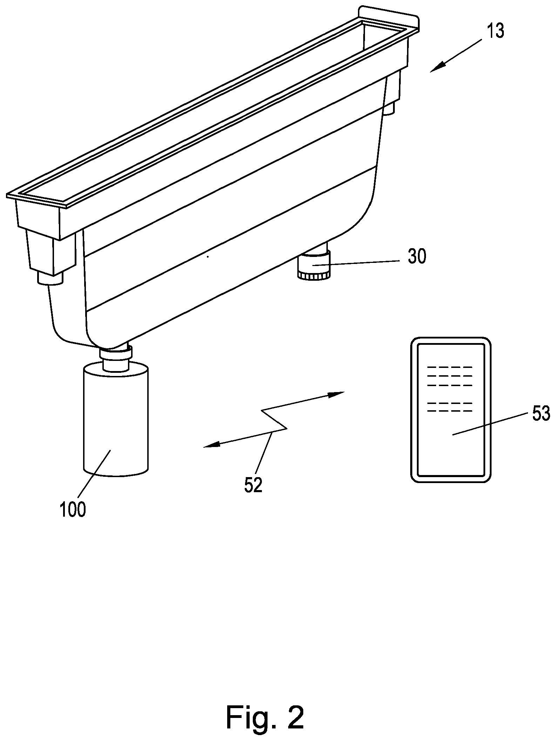

Eine Borkenkäfer-Schlitzfalle, wie sie in den Fig. 1 und 2 dargestellt ist, besteht aus der eigentlichen Falle 1, die ein kastenförmiger Bauteil mit Schlitzen 2 in den Wänden 5 und mit zu den Wänden 5 schräg nach oben weisenden Laschen ist. Am unteren Ende der Falle 1 wird in Nuten 9 ein Trichter 11 eingeschoben, unter dem ein als Trichter wirkender Auffangbehälter 13 angeordnet wird, der ebenfalls in die Nuten 9 eingeschoben ist.

Der Auffangbehälter 13 besitzt als Grundkörper eine Wanne 23 mit an ihren oberen Längsrändern nach außen abstehenden Rippen 25, über die der Auffangbehälter 13 zusammen mit dem Trichter 11 in die am unteren Ende der Falle 1 vorgesehenen Nuten 9 eingeschoben werden kann.

An der Wanne 23 des Auffangbehälters 13 ist eine Leiste 20 vorgesehen, die vom freien Rand der Wanne 23 von der Wanne 23 wegweisend (nach oben) absteht. An der Falle 1 ist wenigstens ein federnder Widerhaken (nicht gezeigt) vorgesehen, der in der Gebrauchslage der Falle 1 nach unten, also zum Auffangbehälter 13, hinweist.

Vom Boden der Wanne 23 gehen zwei Rohrstutzen 26 aus, die als Ausflussöffnungen dienen und die mit Hilfe von Verschlusskappen 30 verschlossen werden können. Im Bereich des Bodens der Wanne 23 sind die von den Rohrstutzen 26 gebildeten Ausflussöffnungen durch Gitter verschlossen.

In den oberen Teil der Falle 1 wird ein für die zu fangende Insektenart, z.B. Borkenkäfer, geeigneter Lockstoff angeordnet, z.B. eingehängt.

Bei dem in Fig. 2 gezeigten Auffangbehälter 13 der Falle 1 ist an der Unterseite des Auffangbehälters 13 eine erfindungsgemäße Vorrichtung 100 angebracht. Dazu wurden die Verschlusskappe 30 und das Gitter entfernt.

In der Falle 1 gefangene Insekten, insbesondere Borkenkäfer, gelangen durch eine Durchtrittsöffnung im Stutzen 26 aus der Wanne 23 und durch eine Eintrittsöffnung in die Vorrichtung 100. Der Eintritt von Insekten in die Vorrichtung 100 tritt verstärkt ein, wenn die Wand der Vorrichtung 100 wenigstens bereichsweise lichtdurchlässiger ist als die Wanne 23 des Auffangbehälters 13, da gefangene Insekten, so auch Borkenkäfer (Buchdrucker), Licht zustreben. Die Wanne 23 des Auffangbehälters 13 der Falle 1 ist bevorzugt aus weniger durchsichtigem Werkstoff (z.B. aus opakem Kunststoff) gefertigt als die Vorrichtung 100, welche aus wenigstens teilweise durchscheinendem oder durchsichtigem Werkstoff besteht.

Die so erfasste Zahl der gefangenen und in der Vorrichtung 100 befindlichen Insekten kann auf einem Anzeigegerät, z.B. einem Display, das an der Falle 1 selbst angeordnet sein kann, angezeigt werden.

Da Insektenfallen, wie die Falle 1, oft in größerer Zahl und bevorzugt an verschiedenen Orten mit Abstand voneinander aufgestellt werden, ist im Rahmen der Erfindung bevorzugt, dass der Falle 1 eine Sendeeinheit zugeordnet ist, die die ermittelte Zahl an gefangenen Insekten über eine Funkstrecke 52 an ein (mobiles) Empfangsgerät 53, das ein für mehrere Fallen 1 gemeinsames Empfangsgerät 53 sein kann, abgibt. Beispielsweise ist vorgesehen, dass die Sendeeinheit, welche mit einem Mikroprozessor und einer SIM-Karte ausgestattet sein kann, die erfasste Zahl an gefangenen Insekten an ein bevorzugt mobiles Endgerät als Empfangsgerät 53, wie ein Tablet oder ein Mobiltelefon, weiterleitet. Auf dem Tablet und/oder dem Mobiltelefon kann die Zahl der gefangenen Insekten über eine installierte App angezeigt werden.

Im Rahmen der Erfindung ist auch in Betracht gezogen, dass die Falle 1 und/oder das (mobile) Empfangsgerät 53 ein akustisches oder optisches Signal (Alarm-SMS oder Alarm-Email) abgibt/abgeben, wenn eine bestimmte Anzahl an Insekten gefangen worden ist.

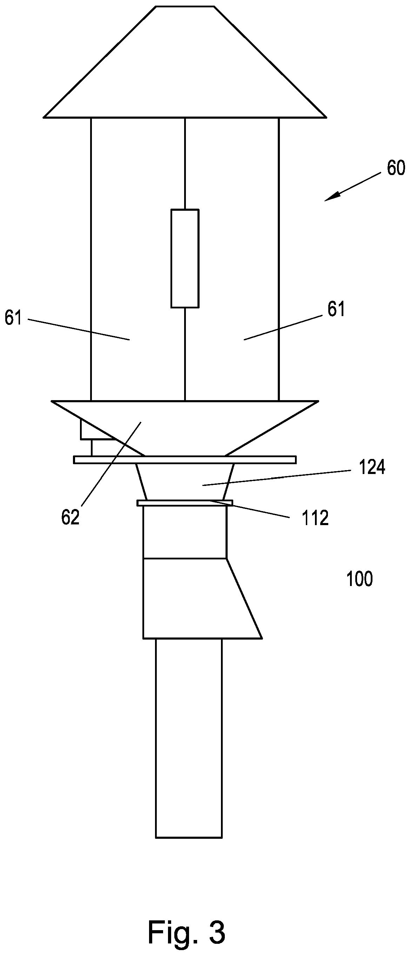

Die in Fig. 3 gezeigte Kreuzbarrierenfalle 60 hat drei oder vier einander kreuzend angeordnete Platten 61, an deren unterem Ende ein Trichter 62 angeordnet ist, der sich von oben nach unten verjüngt.

Wenn die Kreuzbarrierenfalle 60 erfindungsgemäß verwendet wird, wird die erfindungsgemäße Vorrichtung 100 an dem Trichter 62 über einen Adapter 124 angesetzt.

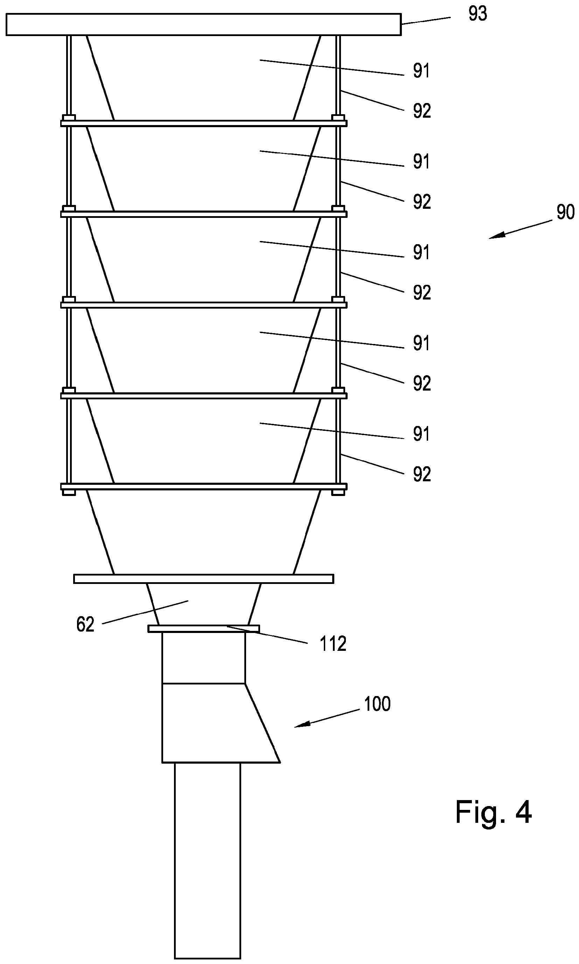

Die Segmenttrichterfalle 90 von Fig. 4 weist mehrere übereinander angeordnete trichterförmige Körper 91 auf, die miteinander über Verbindungselemente 92, die stab- oder drahtförmig ausgebildet sind, verbunden sind. An der Oberseite des obersten Trichters 92 ist ein dachförmiger Teil 93 vorgesehen.

Wenn die Segmenttrichterfalle 90 erfindungsgemäß verwendet wird, wird an den unterhalb des untersten Trichters 92 angeordneten Trichter 62 die erfindungsgemäße Vorrichtung 100 angesetzt.

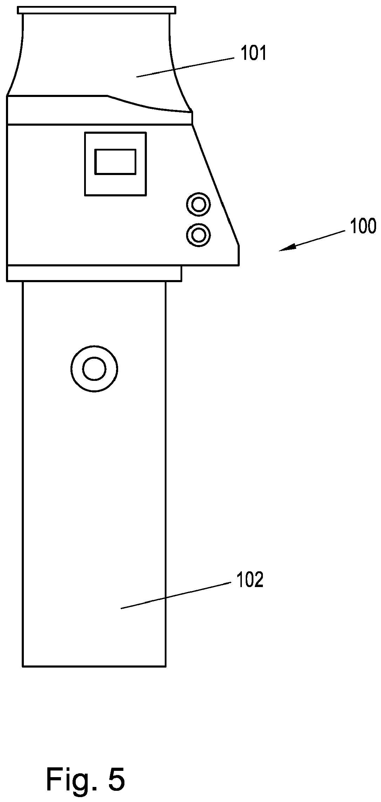

Eine erfindungsgemäße Vorrichtung 100, wie sie in einer Ausführungsform in Fig. 5 gezeigt ist, umfasst ein Gehäuse 101 und einen in Gebrauchslage unterhalb des Gehäuses 101 angeordneten und mit dem Gehäuse 101 verbundenen Schutzbecher 102, in dem ein als Messrohr ausgebildetes Gefäß 103, in dessen innerem Raum 109 sich gefangene Insekten ansammeln, aufgenommen ist.

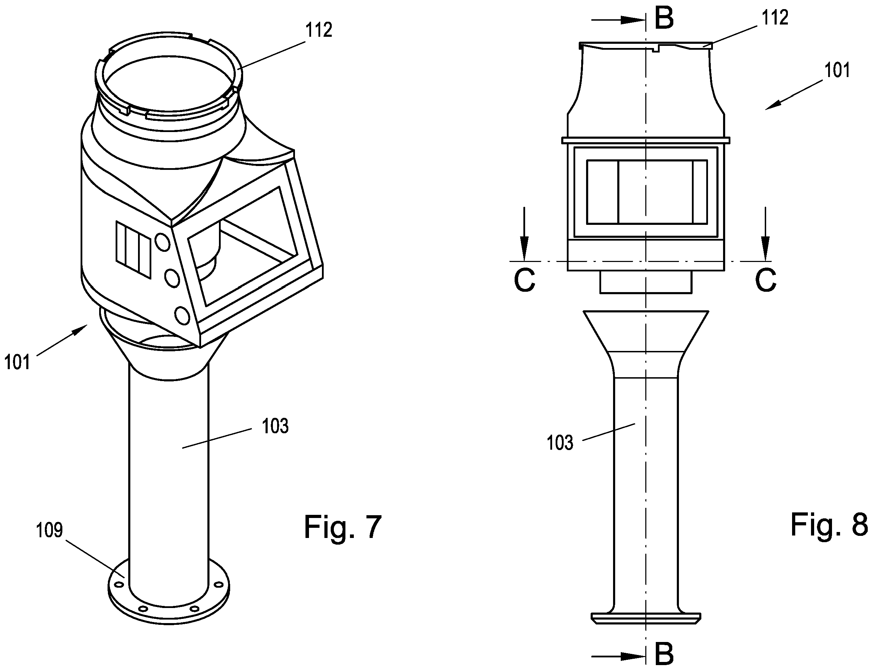

Wie insbesondere die Fig. 7 bis 10 zeigen, ist das Gefäß 103 als Rohr ausgebildet, dessen Raum 109 bevorzugt einen kreisrunden Querschnitt aufweist, also eine Wand hat, die nach Art eines Zylindermantels ausgebildet ist.

An dem in Gebrauchslage oberen Ende 104 des Gefäßes 103 erweitert sich dieses trichterartig. Ein am unteren Ende 105 vorgesehener Boden 106 ist nach außen hin verlängert, sodass ein Ringflansch vorliegt. In dem Boden 106 des Gefäßes 103 sind kleine Öffnungen vorgesehen, durch die allenfalls eingedrungenes Wasser aus dem Gefäß 103 abrinnen kann, da dieses das Erfassen des Volumens von gefangenen Insekten, die sich in dem Gefäß 103 angesammelt haben, beeinträchtigen könnte.

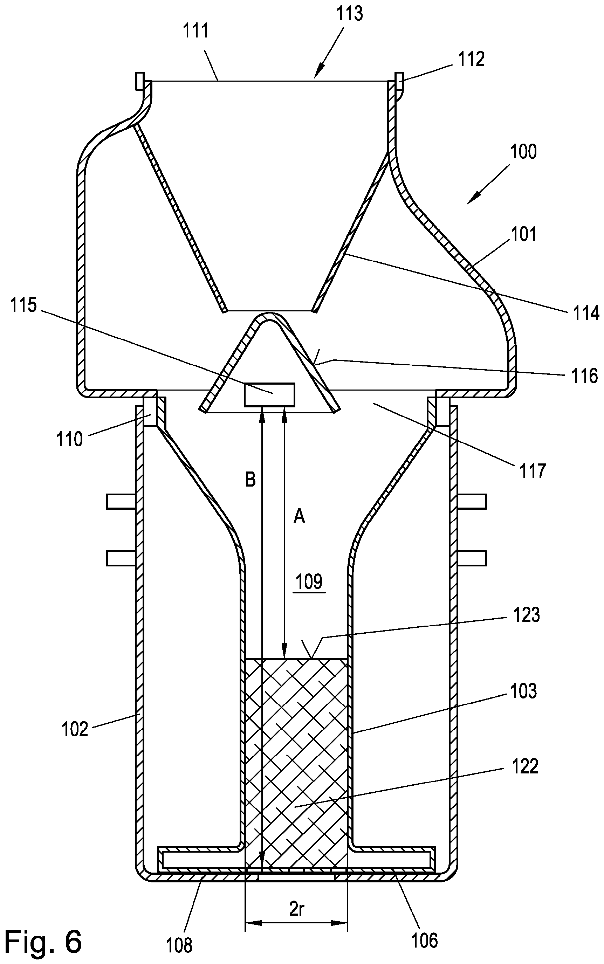

In zusammengebautem Zustand ist das Gefäß 103, das als Messrohr mit klar definierter Bezugsgröße dient, innerhalb des Schutzbechers 102 angeordnet und wird von diesem (vgl. Fig. 6) in Anlage an die Unterseite des Gehäuses 101 gehalten, da der Boden 106 des Gefäßes 103 am Boden 108 des Schutzbechers 102 von innen her anliegt und das Gefäß 103 zentriert.

Der Schutzbecher 102 ist mit dem Gehäuse 101 über eine Kupplung 110 verbunden, wobei diese Kupplung 110 beliebig ausgebildet sein kann. Bevorzugte Ausführungsformen sind Schraubkupplungen (Innengewinde/Außengewinde) oder eine Kupplung nach Art eines Bajonettverschlusses.

Um Wasser aus der Vorrichtung 100 ableiten zu können, ist auch im Boden 108 des Schutzbechers 102 wenigstens eine Öffnung vorgesehen, durch die Wasser abströmen kann.

Das Gehäuse 101 besitzt an seinem in Gebrauchslage oberen Ende 111 eine Öffnung 113, an deren Rand ein Teil einer Kupplung 112 vorgesehen ist, über die die erfindungsgemäße Vorrichtung 100 mit einer Insektenfalle, beispielsweise eine Insektenfalle gemäß den Fig. 1 bis 4, verbunden werden kann. Auch die Kupplung 112 kann eine Schraubverbindung oder eine Kupplung nach Art eines Bajonettverschlusses sein.

Von der oberen Öffnung 113 des Gehäuses ragt ein Trichter 114 nach unten, der sich nach unten hin verjüngt.

Unterhalb der Mündung des Trichters 114 im Gehäuse 101 ist eine Sensoreinheit 115 als Entfernungsmessgerät vorgesehen, die mit einem berührungslos arbeitenden Abstandssensor ausgestattet ist. Der Abstandssensor ist insbesondere ein Infrarot-Abstandssensor. Der Sender und der Empfänger des Abstandssensors sind so ausgerichtet, dass sie in das Innere des Gefäßes 103 weisen. So kann mit Hilfe des Abstandssensors die Lage der Oberfläche 123 von in dem Gefäß 103 angesammelten, gefangenen Insekten, beispielsweise Borkenkäfer (Buchdrucker), gemessen werden. Die Höhe der Schicht in dem Gefäß 103 angesammelter Insekten ergibt sich aus der - gemessenen - Lage der Oberfläche 123 und der bekannten Lage des Bodens 106 des Gefäßes 103 (dieses ist durch den Schutzbecher 102 in definierter Stellung gehalten).

In einer bevorzugten Ausführungsform sind der Sender und der Empfänger des Abstandssensors der Sensoreinheit 115 durch ein Schutzglas (beispielsweise ein Kunstglas) abgedeckt, dem eine Einrichtung zum Reinigen des Schutzglases, beispielsweise eine Einrichtung nach Art eines Scheibenwischers, zugeordnet ist. So wird verhindert, dass die Wirkung des Abstandssensors durch Wassertropfen und/oder Insekten beeinträchtigt wird.

Die Sensoreinheit besitzt in ihrer in das Gehäuse 101 eingebauten Stellung oben eine pyramidenförmige Leitfläche 116, die bewirkt, dass gefangene Insekten aus der Insektenfalle in die Vorrichtung 100 fallen und an dem Abstandssensor vorbei in das trichterförmige, obere Ende 104 des Gefäßes 103 (Messrohr) gelangen. Insbesondere aus Fig. 6 ist ersichtlich, dass zwischen dem unteren Ende der Leitfläche 116 und dem trichterförmigen, oberen Ende 104 des Gefäßes 103 ein ringförmiger Spalt 117 vorgesehen ist, der den Eintritt von Insekten in das Gefäß 103 erlaubt.

Um die erfindungsgemäße Vorrichtung 100 mit Strom zu versorgen, kann diese an ein externes Stromnetz angeschlossen sein.

Bevorzugt ist aber, wenn in der Vorrichtung 100 ein Stromspeicher vorgesehen ist, dem beispielsweise ein an der Außenseite des Gehäuses vorgesehenes Solarpanel 118 zugeordnet ist. Für kabelloses Aufladen ist ein Wireless Powershare-Modul vorgesehen.

Ebenso ist in dem Gehäuse 101 ein Mikro-Controller vorgesehen, mit dem die Zahl der in dem Gefäß 103 angesammelten Insekten in noch zu beschreibender Weise ermittelt wird.

Dem Mikro-Controller können Sensoren zum Erfassen von Temperatur und/oder Feuchtigkeit zugeordnet sein.

Um zu verhindern, dass Wasser zu einem, in die erfindungsgemäße Vorrichtung 100 allenfalls eingebauten Anzeigegerät und/oder zu dem Stromspeicher gelangt, können diese in einem gesonderten Raum des Gehäuses 101 angeordnet sein, wobei bevorzugt ist, dass der gesonderte Raum mit Kunstharz ausgefüllt (ausgegossen) ist.

Das Laden des Stromspeichers der erfindungsgemäßen Vorrichtung 100 kann auch mit Hilfe eines berührungslosen Ladegerätes erfolgen, wobei eine Kombination aus Solarpanel 118 und berührungslosem Ladegerät in Betracht gezogen ist.

Damit der Mikro-Controller upgedatet werden kann, ist dieser in einem gesonderten Raum des Gehäuses 101 angeordnet, der nach außen durch eine Scheibe aus Kunststoff verschlossen ist.

Um zu fangende Insekten verstärkt in das Gefäß 103 der erfindungsgemäßen Vorrichtung 100 zu locken, ist dieses ebenso wie der außerhalb des Gefäßes 103 angeordnete Schutzbecher 102 aus lichtdurchlässigem Werkstoff gefertigt. So gelangen Insekten in ihrem Bestreben, sich zu Licht hin zu bewegen, verstärkt in das Gefäß 103.

Bevorzugt ist im Rahmen der Erfindung, dass der Abstandssensor in der Sensoreinheit 115 nach Art eines Gehäuses ausgebildet und der Hohlraum des Gehäuses mit Kunstharz ausgegossen ist.

Im Rahmen der Erfindung sind die für das Inbetriebsetzen und Regeln der in der erfindungsgemäßen Vorrichtung 100 vorgesehenen Schalter bevorzugt feuchtigkeitsunempfindliche Touch-Sensoren.

Die erfindungsgemäße Vorrichtung 100 arbeitet insbesondere wie folgt:

In einer Insektenfalle, an die die erfindungsgemäße Vorrichtung 100 angeschlossen ist, gefangene Insekten fallen durch den Trichter 114 im oberen Teil 120 des Gehäuses 101 über die Leitfläche 116 der Sensoreinheit 115 nach unten und schließlich durch den Spalt 117 zwischen dem unteren Rand der Leitfläche 116 der Sensoreinheit 115 und dem oberen, sich trichterartig erweiternden Ende 104 des Gefäßes 103 in das Gefäß 103. In dem Gefäß 103 bildet sich eine Schicht 122 aus gefangenen Insekten, die nach und nach dicker (höher) wird.

Die Oberfläche 123 der Schicht 122 aus im Gefäß 103 angesammelten Insekten bewegt sich in dem Gefäß 103 in dem Ausmaß, in dem sich im Gefäß 103 Insekten ansammeln, nach oben.

Mit Hilfe des Abstandssensors der Sensoreinheit 115 wird der Abstand "A" zwischen der Sensoreinheit 115 und der Oberfläche 123 der Schicht 122 aus in dem Gefäß angesammelten Insekten gemessen. Da das Gefäß 103 durch den Schutzbecher 102 in definierter Lage gehalten wird, einerseits, und da die Querschnittsfläche des Gefäßes 103 bekannt ist, anderseits, kann aus der von der Sensoreinheit 115 gemessenen Entfernung das Volumen der in dem Gefäß 103 angesammelten Insekten ermittelt werden.

Aus dem so ermittelten Volumen wird die Zahl der Insekten errechnet, indem das Volumen mit einem Quotienten multipliziert wird, wobei der Quotient der Zahl der Insekten je Volumeneinheit entspricht. Beispielsweise ist der Quotient für Buchdrucker (etwa) 40 Buchdrucker/cm$^3$ und für Kupferstecher (etwa) 600 Kupferstecher/cm$^3$.

Beispielsweise wird dabei wie folgt vorgegangen:

Der Abstand "B" der Innenseite des Bodens 106 des Gefäßes 103 von dem Abstandssensor der Sensoreinheit 115 ist bekannt, weil das Gefäß 103 von dem Schutzbecher 102 in definierter Lage gehalten und zentriert ist.

Die Querschnittfläche "F" des Innenraumes des Gefäßes 103 ist bekannt.

Der Abstand "A" der Oberfläche 123 der Schicht 122 aus in dem Gefäß 103 angesammelten Insekten wird von der Sensoreinheit 115 gemessen.

Das Volumen "V" der Schicht 122 aus in dem Gefäß 103 angesammelten Insekten ist:

$$V = F \ x \ (B - A)$$

Die Zahl "Z" der in dem Gefäß 103 angesammelten Insekten wird durch Multiplizieren des Volumens "V" mit dem Quotienten "Q" errechnet:

$$Z = V \ x \ Q$$

Der Quotient "Q" ist die Zahl von Insekten je Volumenseinheit. Beispielsweise ergibt sich die Zahl von in dem Gefäß 103 angesammelten Buchdruckern wie folgt:

B = 10 cm
A = 5,5 cm
F = 15,9 cm$^2$ (Radius "r" des kreiszylindrischen Innenraumes des Gefäßes gleich 2,25 cm,

$$F = r^2 \ x \ \Pi$$

)
V = 71,55 cm$^3$
Q = 40/cm$^3$
Z = 2862 Buchdrucker

Sobald sich in dem Gefäß 103 eine vorgegebene und vorwählbare Anzahl von Insekten angesammelt hat, kann dieses nach dem Abnehmen des Schutzbechers 102 von dem Gehäuse 101 der Vorrichtung 100 entleert und gegebenenfalls gereinigt und dann wieder eingesetzt werden.

Auf den Umstand, dass das Gefäß 103 zu leeren und gegebenenfalls zu reinigen ist, kann durch ein durch die Vorrichtung 100 abgegebenes Signal hingewiesen werden.

Um das Zurückklettern von Insekten aus dem Gefäß 103 und dem Gehäuse 101 sowie entlang der Sensoreinheit 115 zu verhindern, sind die Wände dieser Bestandteile der Vorrichtung 100 glatt ausgebildet, beispielsweise mit einer (sehr) glatten Teflon-Folie (Stärke beispielsweise 0,5 mm) verkleidet. Alternativ kann das Gefäß 103 zur Gänze aus glattem Kunststoff, wie Teflon, bestehen.

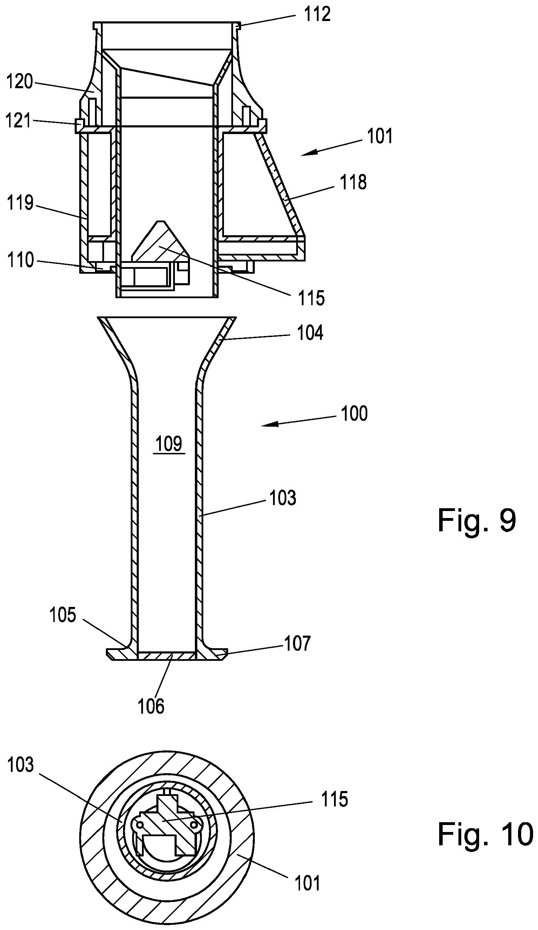

Aus der Schnittdarstellung der Fig. 9 ist erkennbar, dass das Gehäuse 101 aus zwei Teilen, nämlich einem Unterteil 119 und einem Oberteil 120, zusammengesetzt ist. Der Unterteil 119 ist mit dem Oberteil 120 wasserdicht, z.B. durch eine Kupplung 121, verbunden.

In dem Unterteil 119 des Gehäuses 101 ist seitlich eine Aufnahmefläche für das Solarpanel 118 vorgesehen, das den in der Vorrichtung 100 vorgesehenen Stromspeicher mit elektrischem Strom versorgt, um diesen wieder aufzuladen.

Zusammenfassend kann ein Ausführungsbeispiel der Erfindung wie folgt beschrieben werden: Eine Vorrichtung 100 zum Ermitteln der Zahl der in einer Insektenfalle gefangenen Insekten besitzt ein als Messrohr dienendes Gefäß 103, in dem sich die gefangenen Insekten ansammeln. Das Gefäß 103 ist in einem Schutzbecher 102 angeordnet, der an dem unteren Ende eines Gehäuses 101 der Vorrichtung 100 angeordnet ist. Die Lage der Oberfläche 123 der Schicht 122 aus Insekten in dem Gefäß 103 wird mit Hilfe eines Abstandssensors einer Sensoreinheit 115 erfasst. Aus der so erfassten Stärke der Schicht 122 aus angesammelten Insekten und der Querschnittsfläche des Gefäßes 103 wird das Volumen errechnet. Aus dem Volumen wird auf die Zahl der Insekten in dem Gefäß 103 geschlossen.

**Patentansprüche**

1. Vorrichtung (100) zum Ermitteln der Zahl der in einer Insektenfalle gefangenen Insekten, wobei das Volumen der gefangenen Insekten erfasst wird, umfassend

    - ein Gehäuse (101),
    - ein unterhalb des Gehäuses (101) angeordnetes Gefäß (103), in dem ein Raum (109), in dem sich gefangene Insekten sammeln, vorgesehen ist und
    - eine in dem Gehäuse (101) oberhalb des Gefäßes (103) angeordnete, insbesondere in einer Sensoreinheit (115) aufgenommene, Entfernungsmesseinrichtung, wobei das Gefäß (103) ein einseitig offenes Rohr, insbesondere ein Rohr mit der Form des Mantels eines Kreiszylinders, ist, **dadurch gekennzeichnet, dass** im Boden (106) des Gefäßes (103) Öffnungen vorgesehen sind, dass an dem unteren Ende (105) des Gefäßes (103) ein nach außen abstehender Ringflansch (107) vorgesehen ist, dass an dem Gehäuse (101) ein das Gefäß (103) außen umgebender Schutzbecher (102) befestigt ist, dass der Schutzbecher (102) an dem Gehäuse (101) lösbar befestigt ist, dass im Boden (108) des Schutzbechers (102) Öffnungen vorgesehen sind, dass oberhalb der Entfernungsmesseinrichtung eine kegel- oder pyramidenförmige Leitfläche (116) angeordnet ist, dass in dem Bereich des oberen Endes (111) des Gehäuses (101) und innerhalb des Gehäuses (101) ein sich von oben nach unten hin verjüngender Trichter (114) vorgesehen ist und dass die Mündung des Trichters (114) in dem Bereich der Spitze der vorzugsweise pyramidenförmigen Leitfläche (116) angeordnet ist, wobei zwischen der Wand des Gehäuses (101) und dem unteren Rand der Leitfläche (116) ein ringförmiger Spalt (117) vorgesehen ist.

2. Vorrichtung nach Anspruch 1, **dadurch gekennzeichnet, dass** der Entfernungsmesseinrichtung, insbesondere dem Sender und Empfänger des Abstandssensors, ein Schutzfenster zugeordnet ist.

3. Vorrichtung nach Anspruch 2, **dadurch gekennzeichnet, dass** dem Schutzfenster eine Vorrichtung nach Art eines Scheibenwischers zugeordnet ist.

4. Vorrichtung nach einem der Ansprüche 1 bis 3, **dadurch gekennzeichnet, dass** das von dem Gehäuse (101) entfernt liegende Ende des Gefäßes (103), insbesondere der Boden (106) des Gefäßes (103), an dem Boden (108) des Schutzbechers (102) anliegt.

5. Vorrichtung nach einem der Ansprüche 1 bis 4, **dadurch gekennzeichnet, dass** das Gehäuse (101) an seinem oberen Ende eine Kupplung (112) zum Anschließen der Vorrichtung (100) an eine Insektenfalle aufweist.

6. Vorrichtung nach einem der Ansprüche 1 bis 5, **dadurch gekennzeichnet, dass** in der Vorrichtung (100) ein Mikrokontroller zum Ermitteln der Zahl der in dem Gefäß (103) angesammelten Insekten untergebracht ist.

7. Vorrichtung nach Anspruch 6, **dadurch gekennzeichnet, dass** dem Mikrokontroller Sensoren zum Erfassen von Temperatur und/oder Feuchtigkeit zugeordnet sind.

8. Vorrichtung nach einem der Ansprüche 1 bis 7, **dadurch gekennzeichnet, dass** die am oberen Ende des Gehäuses (101) vorgesehene Kupplung (112) zum Anschließen der Vorrichtung (100) an eine Insektenfalle und die Kupplung (110) zwischen dem Schutzbecher (102) und dem Gehäuse (101) als Schraub- oder Bajonett-Kupplungen ausgebildet sind.

9. Vorrichtung nach einem der Ansprüche 1 bis 8, **dadurch gekennzeichnet, dass** die Wand des Gefäßes (103) und/oder des Schutzbechers (102) wenigstens bereichsweise aus lichtdurchlässigem Werkstoff besteht.

10. Vorrichtung nach Anspruch 9, **dadurch gekennzeichnet, dass** die Wand des Gefäßes (103) und/oder des Schutzbechers (102) wenigstens bereichsweise lichtdurchlässiger ist als das Gehäuse (101).

Fig. 1

Fig. 2

Fig. 3

Fig. 4

Fig. 5

Fig. 6

Fig. 8

Fig. 7

Fig. 9

Fig. 10

Fig. 11

Fig. 12

**EP 4 008 181 A1**

Europäisches
Patentamt

European
Patent Office

Office européen
des brevets

## EUROPÄISCHER RECHERCHENBERICHT

Nummer der Anmeldung

EP 21 20 7437

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CN 110 849 434 A (INST PLANT PROT FAAS; SANMING PLANT PROT PLANT INSPECTION STATION) 28. Februar 2020 (2020-02-28) * Abbildung 1 * ----- | 1,4-10 | INV. A01M1/10 G01F11/28 G01F23/00 |
| Y | US 2015/216158 A1 (MIZRACH AMOS [IL] ET AL) 6. August 2015 (2015-08-06) * Absätze [0090] – [0097]; Abbildung 3 * ----- | 1,4-10 | |
| Y | CN 106 035 274 A (ENV AND PLANT PROT INST CHINESE ACAD OF TROPICAL AGRICULTURAL SCIENCES) 26. Oktober 2016 (2016-10-26) * Abbildung 5 * ----- | 1,4-10 | |
| Y | JP 2000 060402 A (IKEDA RIKA KK) 29. Februar 2000 (2000-02-29) * Abbildung 1 * ----- | 1,4-10 | |
| A | US 2013/162443 A1 (OPPENHEIMER CHARLES HUGH [US] ET AL) 27. Juni 2013 (2013-06-27) * das ganze Dokument * ----- | 1-10 | **RECHERCHIERTE SACHGEBIETE (IPC)** A01M G01F |

Der vorliegende Recherchenbericht wurde für alle Patentansprüche erstellt

| Recherchenort | Abschlußdatum der Recherche | Prüfer |
|---|---|---|
| München | 8. April 2022 | Ketelheun, Anja |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 20 7437

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-04-2022

| Im Recherchenbericht angeführtes Patentdokument | Datum der Veröffentlichung | Mitglied(er) der Patentfamilie | Datum der Veröffentlichung |
|---|---|---|---|
| CN 110849434 A | 28-02-2020 | KEINE | |
| US 2015216158 A1 | 06-08-2015 | EP 2892331 A1<br>US 2015216158 A1<br>WO 2014037936 A1 | 15-07-2015<br>06-08-2015<br>13-03-2014 |
| CN 106035274 A | 26-10-2016 | KEINE | |
| JP 2000060402 A | 29-02-2000 | JP 4052610 B2<br>JP 2000060402 A | 27-02-2008<br>29-02-2000 |
| US 2013162443 A1 | 27-06-2013 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 16255 U1
- AT 503707 B1
- WO 2014037936 A1
- US 2019327951 A1
- CN 110849434 A
- CN 107347859 A